# FASCICULE DE BREVET EUROPEEN

(11) **EP 2 072 372 B1**
(45) Date de publication et mention de la délivrance du brevet: **06.10.2010**
(21) Numéro de dépôt: 08300259.2
(22) Date de dépôt: 25.08.2008
(51) Int. Cl.: B62D 3/12, F16C 29/02, F16H 55/28

(54) **Palier de crémaillère de direction pour véhicule automobile**
Gleitlager für die Lenkungszahnstange eines Kraftfahrzeugs
Steering rack bushing for a motor vehicle

(30) Priorité: 20.12.2007 FR 0760055
(43) Date de publication de la demande: 24.06.2009
(73) Titulaire: Renault, 92100 Boulogne Billancourt (FR)
(72) Inventeur: Facchin, Sylvain, 92600 Asnières (FR)

(56) Documents cités:
- WO-A-2004/067357
- JP-A- 57 041 257
- US-A1- 2006 076 180

## Description

La présente invention concerne un dispositif antivibratoire pour système de direction pour véhicule automobile.

L'invention concerne plus précisément un palier pour barreau de crémaillère de direction permettant d'atténuer les vibrations du barreau transmises à son boîtier support.

Les dispositifs de direction de ce type comprennent généralement un boîtier allongé fixe dans lequel est monté un barreau mobile en translation comportant une zone échancrée munie de dents pour former une crémaillère sur laquelle est engrené un pignon relié à la colonne de direction, tels que décrits par exemple dans les documentes FR1470984 ou EP1808355.

Dans la plupart des cas, le barreau est guidé par un ou plusieurs paliers,

Le document JP57041257 décrit un palier correspondant au préambule de la revendication 1.

Le document WO2004/067357 propose un palier pour barreau de crémaillère, comprenant une bague de serrage pourvue d'un alésage excentrique par rapport à la périphérie extérieure de la bague de serrage et entourant un passage de guidage destiné au guidage axial de la crémaillère. Le passage de guidage est constitué d'une bague de guidage supportée élastiquement dans l'alésage de la bague de serrage au moyen d'un élément élastique intercalé entre la bague de serrage et la bague de guidage. Grâce a son excentricité la rotation de la bague de serrage permet d'adapter au mieux le contact entre la crémaillère et le pignon lié à la colonne de direction.

Cependant, bien que le contact entre la crémaillère et le pignon soit améliorer et que l'élément élastique amorti les vibrations entre la bague de guidage et la bague extérieure de serrage lié au boîtier, un tel palier ne permet pas de limiter les vibrations du barreau de crémaillère car un jeu peut subsister entre la bague de guidage et le barreau.

Le document US20060076180 décrit une bague de guidage comportant au moins une portion bombée vers l'intérieur.

Un but de la présente invention est donc de proposer un palier amélioré pour crémaillère de direction, permettant d'atténuer les vibrations du barreau en amortissant le transfert des vibrations vers le boîtier et en limitant le jeu entre le barreau et sa bague de guidage.

A cet effet l'invention propose un palier de guidage pour barreau de crémaillère de direction, comprenant une bague extérieure rigide apte à être fixée au boîtier du barreau, une bague intérieure partiellement rigide dite bague de guidage apte à guider le barreau en translation, et un élément amortisseur élastique intercalé entre la bague extérieure et la bague intérieure, la bague intérieure comportant au moins une portion déformable bombée vers l'intérieure de ladite bague intérieure.

Selon d'autres caractéristiques de l'invention, la portion déformable peut être une portion élastique apte à exercer une force sur le barreau de la crémaillère.

La portion déformable peut être réalisée dans le même matériau que la bague intérieur.

La bague intérieure de guidage peut être cylindrique et peut comporter trois portions déformables positionnées toutes les trois à 120° autour de la bague de guidage.

La bague de guidage intérieure peut comporter des zones d'appui formé par des nervures et le palier peut comporter un moyen de déformation de la portion déformable.

Le moyen de déformation peut être une vis apte à positionner la portion déformable en contact avec le barreau.

La vis peut être positionnée dans un le support lié à la bague de guidage intérieure.

La bague de guidage peut comporter une portion cylindrique et un méplat de façon à recevoir un barreau comportant une zone échancrée, et la portion cylindrique peut alors comporter au moins deux d'appui ponctuel ou linéique et le méplat peut être principalement formé par la portion déformable.

L'invention propose aussi un système de direction comprenant un boîtier allongé fixe dans lequel est monté un barreau mobile en translation comportant une zone échancrée munie de dents pour former une crémaillère apte à être engrenée par un pignon relié à la colonne de direction, et au moins un palier décrit ci-dessus.

D'autres caractéristiques et avantages de l'invention apparaîtront à la lecture de la description qui va maintenant en être faite en se référant aux dessins annexés, sur lesquels:
La figure 1 est une vue en coupe longitudinale d'un système de direction comprenant deux paliers selon l'invention;
La figure 2 est une vue en coupe selon l'axe II-II du premier palier côté pignon de la figure 1 ;
La figure 3 est une vue en coupe selon l'axe III-III du second palier de la figure 1 ;
La figure 4 est une vue agrandie de la figure 1 au niveau du premier palier de l'invention.

Les références utilisées dans toute la description sont les mêmes pour désigner des éléments identiques ou similaires, quant à leur fonction, quelque soit la variante de réalisation de l'invention.

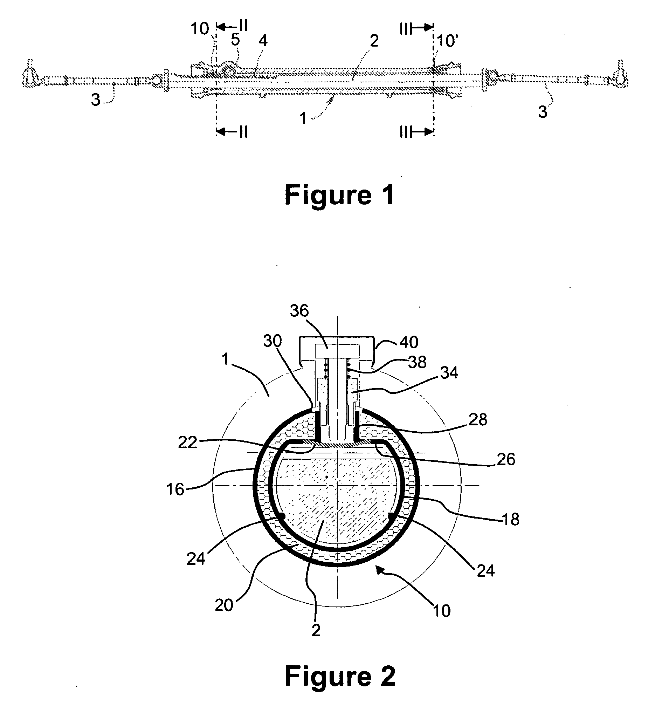

En référence à la figure 1, le système de direction à crémaillère pour véhicule automobile, comprend un boîtier 1 allongé fixe de forme cylindrique dans lequel est monté un barreau 2 cylindrique ou équivalent mobile en translation relié à ses extrémités à des biellettes 3 elles-mêmes reliées aux roues du véhicule.

Le barreau 2 comporte une zone échancrée munie de dents pour former une crémaillère 4 sur laquelle est engrené un pignon 5 relié à la colonne de direction.

Un palier 10, 10' en forme de bague est monté dans le boîtier 1 près de chacune de ses deux extrémités pour guider la translation du barreau 2.

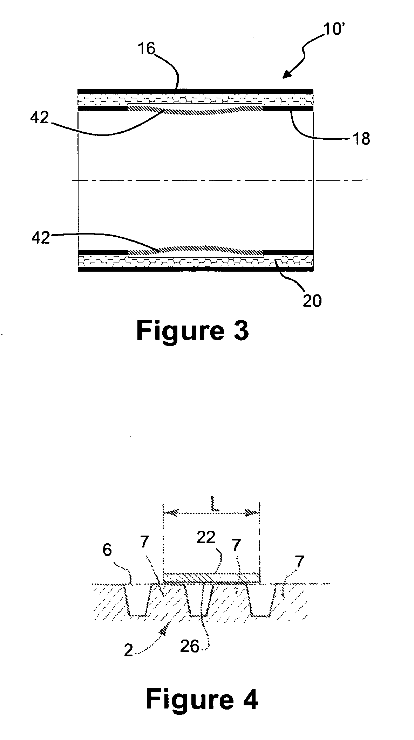

Les figures 2 et 3 montrent chacun des deux paliers 10, 10' réalisés en matériau composite et comprenant une bague intérieure partiellement rigide 18, dite bague de guidage, adjacente au barreau 2, et une bague extérieure entièrement rigide 16 solidaire de la surface intérieure du boîtier allongé 1, par exemple par un montage serré.

Ces deux bagues 16 et 18 sont reliées par un élément amortisseur 16 en matière élastique adhérent aux deux bagues 16 et 18. Un tel élément est, par exemple, réalisé en élastomère.

Le premier palier 10 est situé dans la zone échancrée 4 munie de dents.

En référence à la figure 2, la bague de guidage 18 de ce premier palier 10 présente un méplat souple dans sa partie située en regard de la zone échancrée 4 munie de dents du barreau 2. Ce méplat est une surface 26 parallèle à la surface plane 6 dans laquelle sont situés les sommets des dents 7, comme montrés plus en détail sur la figure 4.

Comme on le voit également sur la figure 4, la surface 26 du premier palier 10 présente une longueur L mesurée dans l'axe du barreau 2 qui est au moins égale à 1,5 fois le pas des dents 7 de la crémaillère 4, de manière à ce que la surface 26 s'appuie toujours sur au moins deux dents 7.

La surface intérieure de la bague de guidage 18 comporte au moins deux nervures 24 d'une section, par exemple arrondie, adaptée à l'appui linéique sur la surface extérieure du barreau 2 et s'étendant dans une direction parallèle à l'axe du barreau 2, et à un coulissement dont le frottement est maîtrisé. Ces nervures 24 sont avantageusement positionnées symétriquement par rapport au plan diamétral perpendiculaire au méplat 26.

Par ailleurs, la surface 26 de la bague de guidage 18 située en regard de la zone échancrée 4 du barreau 2 comprend une ouverture autour de laquelle un rebord 28 s'étend vers l'extérieur du palier positionné dans un alésage de l'élément amortissant et débouchant sur un orifice 30 de la bague extérieure 16 coïncident avec un orifice 32 du boîtier 1 du barreau 2.

Une portion déformable 22 bombée vers l'intérieur de la bague de guidage s'étend au niveau de l'ouverture de la bague de guidage et forme un appui sur la surface plane 6 du sommet d'au moins deux dents 7 de la zone échancrée 4 du barreau 2.

Cette portion déformable 22 est réalisée dans le même matériau élastique que la bague de guidage 18 ou dans un matériau élastique différent raccordé à la bague de guidage 18. La géométrie de la portion 22 adaptée pour se déformer localement sous l'action d'un élément de serrage 36.

Un support 34 comportant un alésage traversant fileté apte à recevoir l'élément de serrage 36 qui est une vis par exemple, est fixé au rebord 28 de la bague de guidage 18.

La tête de la vis 36 est accessible par l'orifice 32 du boîtier 1, et l'extrémité de la vis 36 est en contact avec la portion déformable 22, afin que le serrage de la vis 36 déforme la portion 22 en direction du barreau 2 jusqu'à ce que ladite portion déformable 22 forme un appui complémentaire aux nervures 24 sur le barreau 2.

Un ressort 38 peut être placé entre la tête de la vis 36 et le support fileté 34 afin d'éviter un desserrage de la vis en limitant un mouvement vibratoire entre ces deux pièces 34 et 36.

Enfin, l'orifice 32 du boîtier 1 permettant l'accès à la vis 36 peut être refermé par un capot 40 de manière à assurer l'étanchéité du système de direction.

Un tel palier permet avantageusement de réduire considérablement la friction entre le barreau 2 et la bague de guidage 18 grâce aux nervures 24, et de supprimer le jeu entre le barreau 2 et la bague de guidage 18 grâce au positionnement de la portion déformable 22 de la bague 18 en appui sur le barreau 2.

En référence à la figure 3, le second palier 10' situé à l'extrémité du boîtier 1 du barreau 2 opposée au premier palier, comprend une bague de guidage cylindrique rigide 18 comportant trois portions déformables élastiques 42 bombées vers l'intérieur de ladite bague de guidage 18.

Ces portions déformables 42 sont disposées tous les 120° autour de la bague de guidage 18. Ces portions déformables peuvent être réalisées dans le même matériau que la bague intérieure 18 ou dans un matériau différent rapporté sur la bague intérieure 18.

Le diamètre de la bague de guidage 18 au niveau des extremums des portions déformables bombées 42 est légèrement inférieur au diamètre du barreau 2 de la crémaillère, à titre d'exemple la différence de diamètre est d'environ 0,5 à 1 millimètre.

Ainsi lors du montage du barreau 2 dans la bague de guidage 18, les portions déformables élastiques 42 s'adaptent au diamètre du barreau 2 et forment trois appuis ponctuels ou linéaires aux extremums des portions déformables bombées 42 permettant ainsi un coulissement dont le frottement est limité et de supprimer le jeu entre la bague de guidage 18 et le barreau 2.

Les principaux avantages du dispositif de direction à crémaillère que l'on vient de décrire sont les suivants.

La couche 20 en matière élastique des paliers 10 et 10' amortit la transmission des vibrations de la bague de guidage 18 vers le boîtier 1 et de ce fait vers la colonne de direction et le châssis du véhicule, ce qui permet d'améliorer le confort vibratoire de conduite du véhicule.

Les portions déformables bombées 22, 42 permettent de compenser les jeux entre le barreau 2 et la bague de guidage 18 du palier 10 et 10' limitant les vibrations du barreau dans les paliers, tout en limitant les frottements assurant ainsi une translation optimale. Les vibrations du barreau dans les paliers sont ainsi filtrées vers le boîtier 1, tout en limitant les frottements assurant ainsi une translation optimale du barreau 2.

## Revendications

1. Palier de guidage (10, 10') pour barreau (2) de crémaillère de direction, comprenant une bague extérieure rigide (16) apte à être fixée au boîtier (1) du barreau, une bague intérieure partiellement rigide dite bague de guidage (18) apte à guider le barreau en translation, et un élément amortisseur élastique (20) intercalé entre la bague extérieure et la bague intérieure, **caractérisé en ce que** la bague intérieure (18) comporte au moins une portion déformable (22, 42) bombée vers l'intérieure de ladite bague intérieure (18).

2. Palier (10) de guidage selon la revendication 1, **caractérisé en ce que** la portion déformable (22) est une portion élastique apte à exercer une force sur le barreau (2) de la crémaillère.

3. Paliers (10) de guidage selon la revendication 2, **caractérisé en ce que** la portion déformable (22) est réalisée dans le même matériau que la bague intérieur (18).

4. Paliers (10') de guidage selon une des revendication 2 ou 3, **caractérisé en ce que** la bague intérieure de guidage (18) est cylindrique et comporte trois portions déformables (42) positionnées toutes les trois à 120° autour de la bague de guidage.

5. Palier de guidage (10) selon la revendication 1, **caractérisé en ce que** la bague de guidage intérieure (18) comporte des zones d'appui formé par des nervures (24) et **en ce que** le palier comporte un moyen de déformation (36) de la portion déformable (22).

6. Palier de guidage (10) selon la revendication 5, **caractérisé en ce que** le moyen de déformation est une vis (36) apte à positionner la portion déformable (22) en contact avec le barreau (2).

7. Palier de guidage (10) selon la revendication 6, **caractérisé en ce que** la vis (36) est positionnée dans un le support (34) lié à la bague de guidage intérieure (18).

8. Palier de guidage (10) selon une des revendications 6 ou 7, **caractérisé en ce que** la bague de guidage (18) comporte une portion cylindrique et un méplat (26) de façon à recevoir un barreau (2) comportant une zone échancrée (4), **en ce que** la portion cylindrique comporte au moins deux d'appui ponctuel ou linéique (24) et **en ce que** le méplat est principalement formé par la portion déformable (22).

9. Système de direction comprenant un boîtier (1) allongé fixe dans lequel est monté un barreau (2) mobile en translation comportant une zone échancrée (4) munie de dents pour former une crémaillère apte à être engrenée par un pignon (5) relié à la colonne de direction, **caractérisé en ce qu'**il comporte au moins un palier (10, 10') selon un des revendications précédentes.

## Claims

1. Guide bushing (10, 10') for a steering rack bar (2), comprising a rigid outer ring (16) that can be fixed to the housing (1) of the bar, a partially rigid inner ring known as the guide ring (18) able to guide the bar in its translational movement, and an elastic damping element (20) inserted between the outer ring and the inner ring, **characterized in that** the inner ring (18) comprises at least one deformable portion (22, 24) bulging towards the inside of the said inner ring (18).

2. Guide bushing (10) according to Claim 1, **characterized in that** the deformable portion (22) is an elastic portion able to apply force to the rack bar (2).

3. Guide bushings (10) according to Claim 2, **characterized in that** the deformable portion (22) is made of the same material as the inner ring (18).

4. Guide bushings (10') according to one of Claims 2 and 3, **characterized in that** the inner guide ring (18) is cylindrical and has three deformable portions (42) all three of them positioned 120° apart around the guide ring.

5. Guide bushing (10) according to Claim 1, **characterized in that** the inner guide ring (18) comprises supporting regions formed of ribs (24) and **in that** the bushing comprises a deforming means (36) for deforming the deformable portion (22).

6. Guide bushing (10) according to Claim 5, **characterized in that** the deforming means is a screw (36) able to bring the deformable portion (22) into contact with the bar (2).

7. Guide bushing (10) according to Claim 6, **characterized in that** the screw (36) is positioned in a support (34) connected to the inner guide ring (18).

8. Guide bushing (10) according to one of Claims 6 and 7, **characterized in that** the guide ring (18) comprises a cylindrical portion and a flat (26) so as to receive a bar (2) that comprises a notched region (4), and **in that** the cylindrical portion comprises at least two ribs for discrete or linear support (24) and **in that** the flat is formed mainly by the deformable portion (22).

9. Steering system comprising a fixed elongatedx housing (1) in which there is mounted, with the ability to move translationally, a bar (2) comprising a notched region (4) provided with teeth to form a rack able to mesh with a pinion (5) connected to the steering column, **characterized in that** it comprises at least one bushing (10, 10') according to one of the preceding claims.

## Patentansprüche

1. Führungslager (10, 10') für einen Stab (2) einer Lenkungszahnstange, das einen steifen äußeren Ring (16), der am Gehäuse (1) des Stabs befestigt werden kann, einen teilweise steifen inneren Ring, Führungsring (18) genannt, der den Stab in Translationsrichtung führen kann, und ein elastisches Dämpfungselement (20) enthält, das zwischen den äußeren Ring und den inneren Ring eingefügt ist, **dadurch gekennzeichnet, dass** der innere Ring (18) mindestens einen verformbaren Abschnitt (22, 42) aufweist, der zur Innenseite des inneren Rings (18) gewölbt ist.

2. Führungslager (10) nach Anspruch 1, **dadurch gekennzeichnet, dass** der verformbare Abschnitt (22) ein elastischer Abschnitt ist, der auf den Stab (2) der Zahnstange eine Kraft ausüben kann.

3. Führungslager (10) nach Anspruch 2, **dadurch gekennzeichnet, dass** der verformbare Abschnitt (22) aus dem gleichen Material wie der innere Ring (18) hergestellt ist.

4. Führungslager (10') nach einem der Ansprüche 2 oder 3, **dadurch gekennzeichnet, dass** der innere Führungsring (18) zylindrisch ist und drei verformbare Abschnitte (42) aufweist, die alle drei in einem Abstand von 120° um den Führungsring angeordnet sind.

5. Führungslager (10) nach Anspruch 1, **dadurch gekennzeichnet, dass** der innere Führungsring (18) Auflagezonen aufweist, die von Rippen (24) gebildet werden, und dass das Lager eine Einrichtung (36) zum Verformen des verformbaren Abschnitts (22) aufweist.

6. Führungslager (10) nach Anspruch 5, **dadurch gekennzeichnet, dass** die Verformungseinrichtung eine Schraube (36) ist, die den verformbaren Abschnitt (22) in Kontakt mit dem Stab (2) positionieren kann.

7. Führungslager (10) nach Anspruch 6, **dadurch gekennzeichnet, dass** die Schraube (36) in einem Träger (34) positioniert ist, der mit dem inneren Führungsring (18) verbunden ist.

8. Führungslager (10) nach einem der Ansprüche 6 oder 7, **dadurch gekennzeichnet, dass** der Führungsring (18) einen zylindrischen Abschnitt und eine Abflachung (26) aufweist, um einen Stab (2) aufzunehmen, der eine eingebuchtete Zone (4) aufweist, dass der zylindrische Abschnitt mindestens zwei Rippen für eine punktförmige oder längenbezogene Auflage (24) aufweist, und dass die Abflachung hauptsächlich vom verformbaren Abschnitt (22) geformt wird.

9. Lenksystem, das ein festes längliches Gehäuse (1) enthält, in das ein translationsbeweglicher Stab (2) montiert ist, der eine eingebuchtete Zone (4) aufweist, die mit Zähnen versehen ist, um eine Zahnstange zu bilden, in die ein mit der Lenksäule verbundenes Ritzel (5) eingreifen kann, **dadurch gekennzeichnet, dass** es mindestens ein Lager (10, 10') nach einem der vorhergehenden Ansprüche aufweist.
